# EUROPEAN PATENT APPLICATION

(11) **EP 2 249 304 A1**
(43) Date of publication of application: **10.11.2010**
(21) Application number: 09290324.4
(22) Date of filing: 05.05.2009
(51) Int. Cl.: G06Q 30/00

(54) **Method and device for dynamically changing and billing messages displayed on an advertisement panel**

(71) Applicant: Alcatel Lucent, 75008 Paris (FR)
(72) Inventor: Van Bogaert, Jan, 3140 Keerbergen (BE)
(74) Representative: BiiP cvba

(57) **Abstract**

A method for dynamically changing messages displayed on an advertisement panel (P1, P2) comprises:
- measuring a number or density of mobile terminals within an area containing the advertisement panel (P1, P2); and
- adapting a message displayed on the advertisement panel (P1, P2) and/or the display duration of a message on the advertisement panel (P1, P2) and/or the price for displaying a message on the advertisement panel (P1, P2) depending on the number or density of mobile terminals measured.

## Description

### Field of the Invention

The present invention generally relates to changing messages displayed on an advertisement panel, like for instance advertisements shown on advertisement panels along highways, in parks, in sports facilities, in shopping malls, etc. More particularly, the invention concerns the differentiation of advertisements shown on various advertisement panels, and the automation of content changes or usage cost (billing) of advertisement panels in time.

### Background of the Invention

Today, advertisement panels along highways, in sport facilities, in railway stations, in shopping malls, etc. typically show the same set of advertisements for a long period in time. As long as an advertisement campaign is running, the advertisement panels of a service provider will display the add belonging to that advertisement campaign, irrespective of the fact these advertisement panels are located along a highway with high visibility, or within a small village with limited passage and consequently limited visibility. It is not possible today to differentiate advertisement campaigns depending on the location of the advertisement panels and the visibility of the panels other than long term averages and perceived location attractiveness.

Furthermore, advertisement on a panel along a highway, in sports facilities, in a railway station, etc. is nowadays changed manually, typically requiring the intervention of technicians. In order to change the content on an advertisement panel, the panel may be subdivided in horizontal or vertical ribs that temporarily rotate in order to display differing messages in time. Alternatively, the advertisements may be shown on an electronic display panel that is computer-controlled in order to temporarily show the different messages in predefined sequence and for predefined time intervals.

In summary, the known advertisement techniques do not allow differentiation of the advertisements taking into account the actual exposure to audiences of the respective panels at different locations. Further, the known techniques for changing messages displayed on a panel are often static and require manual interventions by technicians or pre-programming. As a consequence thereof, poor guarantees can be given on the effectiveness, e.g. the reached audience. Another consequence is that pricing of advertisements on panels is rather static, typically a fixed price based on the surface occupied by the message, and the location of the panel.

It is an objective of the present invention to disclose a method and device for dynamically changing messages displayed on an advertisement panel that overcomes the above mentioned drawbacks of the known solutions. In particular, it is an objective to provide a method and device that enables dynamic differentiation over various advertisement panels and that enables accurate billing of dynamically changing messages. It is a further objective to increase the flexibility in changing messages displayed on an advertisement panel.

### Summary of the Invention

According to the present invention, the above listed shortcomings of the prior art are overcome by the method for dynamically changing and billing of messages displayed on an advertisement panel defined by claim 1. This method comprises the steps of:
- measuring a number or density of mobile terminals within an area containing the advertisement panel; and
- adapting a message displayed on the advertisement panel and/or the display duration of a message on the advertisement panel, and/or the price for displaying a message on the advertisement panel depending on the number or density of mobile terminals measured.

Indeed, by counting the number or density of mobile terminals within the vicinity of the advertisement panel, a service provider can estimate accurately the number of people that are within the vicinity of the advertisement panel at a certain point in time. This information can then be used by a microprocessor, PLC, or the like to change the message that is displayed dynamically in time. It can also be used by a computer to calculate the cost to be billed to the person or company ordering the ad campaign or to determine that the right threshold of exposure of the ad has been reached. The number or density of mobile terminals can for instance be determined through triangulation by the mobile base station(s) covering the area, or through alternate techniques, such as measuring the number of mobile terminals that are connected with a Femtocell or small cellular base station e.g. covering the area of a single shop. Thanks to the invention, different messages can be displayed on advertisement panels in areas with low visibility, i.e. areas with few measured viewers, and advertisement panels in areas with high visibility, i.e. areas with dense mobile terminal presence. Differentiation in advertisement campaigns that run on highly visible advertisement panels (or that run on moments with high visibility) and advertisement campaigns that run on panels in less crowdy areas (or run on moments with low visibility) becomes feasible. Thanks to the invention, the messages displayed on the advertisement panel will further change dynamically in relation to the number or density of people within the vicinity of that panel, without intervention of a technician and in a non pre-programmed fashion. The information on the number or density of mobile terminals and on the displayed messages can further be used to determine the value of for instance advertisement space at the location of the panel dynamically in time. This will enable service providers to more fairly bill their customers using advertisement space.

It is noticed that the expression "A and/or B" as used in the claims, must be interpreted to cover either A without B, or B without A, or A and B.

Optionally, as defined by claim 2, the method according to the invention may comprise:
- generating a virtual dynamic map representing the density of mobile terminals within the area.

Thus, a virtual map showing the density of people can be generated and shown to service providers. The map is called "virtual" because the map is not necessarily displayed as such on a screen or on paper, but may be a collection of geographical data stored in computer memory (e.g. data indicative for the location of mobile phones) that is correlated with other geographical data also stored in computer memory (e.g. data indicative for the location of advertisement panels).

Further optionally, as defined by claim 3, the method according to the invention may comprise:
- mapping the density map with the location and direction of one or more advertisement panels; and
- adapting the messages displayed on the advertisement panels and/or adapting the display duration of messages displayed on the advertisement panels and/or adapting the price for displaying messages on the advertisement panels depending on the mapping.

Thus, the virtual map showing the density of mobile terminals may be superimposed with information indicative for the location and direction of the advertisement panels. As a result, an accurate estimation can be made of the audience that is likely to notice the message on the panel, and the messages displayed on the panels may be changed or charged dynamically in time depending on the correlation or mapping between the density map and the information indicative for location and direction of the panels.

Another aspect of the method according to the invention, defined by claim 4, is that the steps of measuring a number of mobile terminals, generating a density map, and adapting the message may be repeated periodically or may be executed continuously, generating a dynamic map with the possibility to keep track and count the users that leave or enter particular area's ...

Thus, the number or density of mobile terminals, and eventually also the virtual density map, can be updated at regular time intervals or continuously. Since people will move in and out of the area, the message that will be displayed on the advertisement panel(s) can be changed in order to adapt the message (and eventually also the value of the space) in correspondence with the actual reached audience.

Optionally, as defined by claim 5, the message may be adapted each time the number or density of mobile terminals exceeds a threshold.

Thus, the replacement of advertisements may be scheduled at the moment where a lower threshold of expected potential viewers has been reached. As a consequence, the service provider can guarantee a minimum audience to his customers paying to have certain messages displayed.

Further optionally, as defined by claim 6, the method according to the invention may comprise:
- determining advertisement pricing for the advertisement panel in time depending on the number or density of mobile terminals.

Thus, a service provider can tailor the price of advertisement space to the number of potential viewers. A premium ad may be displayed when many people are present in the vicinity of the advertisement panel, and a cheaper ad may be shown when the crowd disappears. An advertiser will be given evidence of the potential viewers and he will be charged accordingly, i.e. depending on the number of people reached. This way, an advertiser or publisher will be given increased visibility on the effectiveness of for instance an advertisement campaign.

In addition to the method, the present invention, also relates to a corresponding device for dynamically changing messages displayed on an advertisement panel as defined by claim 7. Such device comprises:
- means for measuring a number or density of mobile terminals within an area containing the advertisement panel; and
- means for adapting a message displayed on the advertisement panel and/or the display duration of a message on said advertisement panel and/or the price for displaying a message on said advertisement panel depending on the number or density of mobile terminals measured.

### Brief Description of the Drawings

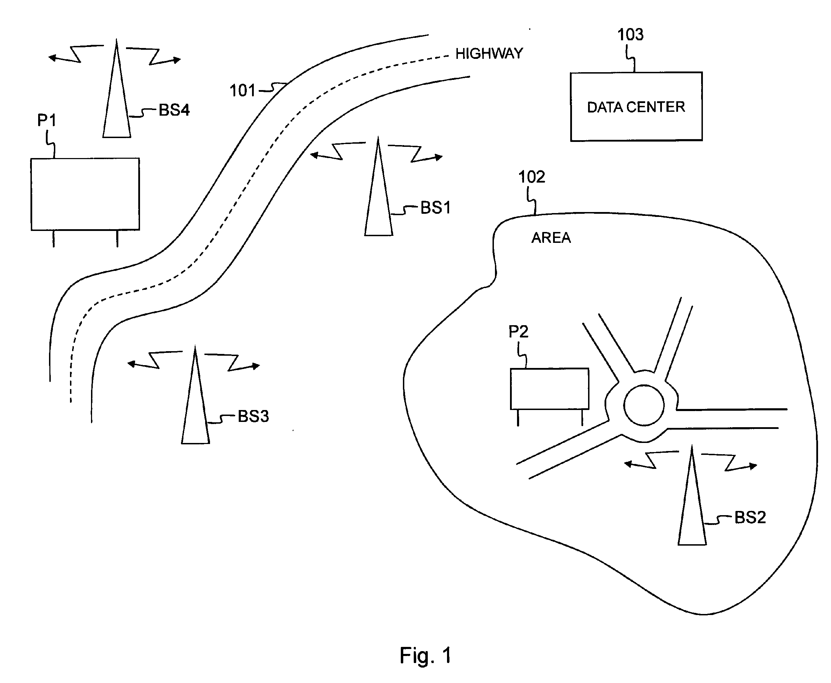

Fig. 1 illustrates an embodiment of the method and device according to the present invention.

### Detailed Description of Embodiment(s)

Fig. 1 shows a data center 103 of a service provider, a first advertisement panel P1 of that service provider located near highway 101 within the vicinity of mobile base stations BS1, BS3 and BS4, and a second advertisement panel P2 of that service provider located in area 102 within the vicinity of mobile base station BS2. A server in the data center 103 is supposed to interface with the infrastructure of the telecom operator(s) whose network(s) contain the base stations BS1 to BS4. The data center 103 further hosts equipment, e.g. a server or management platform, that interfaces with the advertisement panels P1 and P2 in order to dynamically vary the different advertisement messages displayed thereby.

By measuring and comparing the received radio signal, the mobile base stations BS1 to BS4 and their controllers can determine the proximity of mobile phones within or adjacent to their coverage area with certain accuracy. By doing this for all mobile phones in the area, a fairly accurate knowledge of the density of people within the covered area can be gained. When this triangulation information is shared with a server in the data center 103, the latter server can produce a virtual map showing the density of people in the different areas. This virtual map representing mobile terminals (or people) presence may be updated at regular time intervals or continuously, as people move in and out of the area. The same or different server superimposes the virtual map with information indicative for the location and direction of advertisement panels operated by the service provider, e.g. P1 and P2. As a result, an accurate estimation of the audience that is likely to notice the advertisement on the different advertisement panels operated by the service provider can be made at any point in time.

By counting and mapping the number of mobile terminals within the vicinity of advertisement panel P1, the service provider can make an accurate estimate of the number of people that are in the vicinity of that advertisement panel P1 at a given time. This information is used by the server to dynamically determine the advertisement that will be shown on advertisement panel P1, and to determine the value of the advertisement space on advertisement panel P1 dynamically in time.

The service provider operating the advertisement panels P1 and P2 can guarantee a minimum audience to its customers. This can be done in several ways. For instance, from the information received from the telecom operators, one can measure the number of people that are in the vicinity of an advertisement panel and schedule replacement of the content at a point in time where a lower threshold of expected potential viewers has been reached. Alternatively, one can use advertisement panels that can change content even more dynamically. By changing the displayed content dynamically, the number of potential viewers of advertisements can be tailored, for instance displaying a premium ad in areas such as highway 101 on moments where many people are present in such area (e.g. in case of traffic jam), and showing a cheaper ad when the crowd disappears or on advertisement panels in areas like area 102 with a smaller mobile terminal density.

The person or company buying the advertisement space is given evidence of the potential viewers of the advertisement. The company is also charged accordingly, i.e. depending on the public reached. Alternatively, if the company is charged a predetermined fixed amount, the ad is replaced when the predetermined audience size is reached. The company will also be given better visibility on the effectiveness of its advertisement campaign.

As an alternative to mobile triangulation, the servers in data center 103 may for instance use the number of mobile terminals that connect with a femtocell, i.e. a small base station covering a limited area such as a single shop, in order to dynamically control or bill the advertisements displayed on screens or advertisement panels in the immediate vicinity of such femtocell. A drawback of the measurement based on femtocells is that one can only count the number of mobile terminals that have subscribed with the operator of the femtocells.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being defined by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for dynamically changing messages displayed on an advertisement panel (P1, P2), said method comprising the steps of:
- measuring a number or density of mobile terminals within an area containing said advertisement panel (P1, P2); and
- adapting a message displayed on said advertisement panel (P1, P2) and/or the display duration of a message on said advertisement panel (P1, P2) and/or the price for displaying a message on said advertisement panel (P1, P2) depending on said number or density of mobile terminals measured.

2. The method according to claim 1, also comprising:
- generating a virtual dynamic map representing the density of mobile terminals within said area.

3. The method according to claim 2, also comprising:
- mapping said density map with the location and direction of one or more advertisement panels (P1, P2); and
- adapting the messages displayed on said one or more advertisement panels (P1, P2) and/or adapting the display duration of messages displayed on said one or more advertisement panels (P1, P2) and/or adapting the price for displaying messages on said one or more advertisement panels (P1, P2) depending on said mapping.

4. The method according to claim 1,
wherein said steps of measuring a number of mobile terminals, generating a density map, and adapting the message are repeated periodically or continuously.

5. The method according to claim 1,
wherein said message is adapted each time said number or density of mobile terminals exceeds a threshold.

6. The method according to claim 1, also comprising:
- determining advertisement pricing for said advertisement panel (P1, P2) in time depending on said number or density of mobile terminals.

7. A device for dynamically changing messages displayed on an advertisement panel (P1, P2), said device comprising:
- means for measuring a number or density of mobile terminals within an area containing said advertisement panel (P1, P2); and
- means for adapting a message displayed on said advertisement panel (P1, P2) and/or the display duration of a message on said advertisement panel (P1, P2) and/or the price for displaying a message on said advertisement panel (P1, P2) depending on said number or density of mobile terminals measured.
